# FASCICULE DE BREVET EUROPEEN

(11) **EP 0 390 249 B1**
(45) Date de publication et mention de la délivrance du brevet: **12.01.1994**
(21) Numéro de dépôt: 90200619.6
(22) Date de dépôt: 16.03.1990
(51) Int. Cl.: F16K 11/074

(54) **Robinet monocommande avec plaques en matériau dur, dont la plaque mobile peut osciller autour du raccord de débit**
Einhebelmischventil mit Scheiben aus hartem Material, bei dem die bewegliche Scheibe um den Durchflussanschluss drehbar ist
Single handle mixing valve with plates of hard material, where the movable plate can oscillate around the outlet connection

(30) Priorité: 31.03.1989 IT 6722689
(43) Date de publication de la demande: 03.10.1990
(73) Titulaire: STUDIO TECNICO SVILUPPO E RICERCHE S.T.S.R. s.r.l., I-46025 Poggio Rusco (Mantova) (IT)
(72) Inventeur: Ferrari, Leopoldo, I-20084 Lacchiarella (Milano) (IT)
(74) Mandataire: Patrito, Pier Franco, Dr. Ing.

(56) Documents cités:
- FR-A- 2 402 133

## Description

Cette invention a trait à un robinet mélangeur monocommande comme défini dans le préambule de la revendication 1. Un tel robinet mélangeur est connu, par exemple, par le document FR-A-2 402 133.

Parmi les différentes possibilités de montage et de guidage de la plaque mobile d'un robinet mélangeur monocommande avec plaques en matériau dur, il est connu que cette plaque peut être installée de sorte à pouvoir osciller autour d'un point d'appui constituant un pivot. Ce montage est préféré pour certaines applications, et parmi ses avantages il faut mentionner que l'extension limitée des déplacements de la plaque qui peut osciller favorise la conservation d'une couche de graisse lubrifiante entre les plaques fixe et mobile, ainsi assurant un fonctionnement doux et régulier du robinet pendant une période de temps suffisamment longue. Dans les modes de réalisation connus de ce genre, la plaque mobile comporte une queue qui est guidée, en constituant un pivot, dans une cage qui renferme les mécanismes du robinet, ou bien la plaque mobile comporte une dent constituant un pivot, laquelle fait saillie et engage une rainure fixe de guidage, ou bien encore la plaque mobile comporte une fente dans laquelle engage une dent fixe constituant un pivot. Toutefois, ces modes de réalisation demandent des configurations relativement compliquées de la plaque mobile, dont le prix de revient est ainsi augmenté. En outre, bien souvent on rencontre des difficultés pour réaliser dans un robinet de ce genre des moyens de pré-fermeture, lesquels sont avantageux pour obtenir un comportement plus graduel du robinet, particulièrement pendant le débit de quantités limités d'eau, ainsi que pour réduire le bruit produit par le robinet.

Le but principal de la présente invention est de perfectionner le genre de robinet dont est question, de sorte à permettre l'obtention d'un fonctionnement régulier sans demander pour la plaque mobile des configurations compliquées. Un autre but de l'invention est de rendre possible et facile l'introduction dans le robinet de moyens de pré-fermeture efficaces, tout sans rendre économiquement onéreuse sa fabrication.

Ces buts sont atteints, suivant l'invention, dans un robinet mélangeur comme défini dans la revendication 1.

Ledit creux de la plaque mobile, constituant un conduit de passage de l'eau, peut être borgne, ou bien il peut traverser de part en part la plaque mobile, laquelle dans ce cas coopère de façon étanche avec une tête de commande qui ferme ledit creux.

De préférence, ledit organe constituant un raccord de sortie est une partie d'un organe de support de la plaque fixe du robinet et il traverse un passage de sortie correspondant menagé dans la plaque fixe. De préférence, en outre, un organe en matériau résistant à l'usure et ayant un coefficient de frottement réduit est inséré dans ledit creux de la plaque mobile et il constitue un accouplement cinématique avec ledit organe formant un pivot.

Grâce à la disposition fondamentale de l'invention, la plaque mobile ne demande aucune configuration compliquée ni aucune partie spécialement prévue pour coopérer avec le pivot, parce que cette coopération est assurée par le même creux qu'on devrait en tous cas prévoir dans la plaque mobile pour le passage de l'eau. Si l'on prévoit ledit organe spécial constituant l'accouplement cinématique avec l'organe constituant le pivot, on peut éviter le contact direct entre le pivot et le matériau dur de la plaque mobile, qui pourrait produire du frottement et de l'usure.

Du fait que le raccord de sortie s'étend jusqu'au niveau de la plaque mobile du robinet, il est en tous cas facile de prévoir des moyens de pré-fermeture coopérant avec ledit raccord de sortie. En particulier, ces moyens de pré-fermeture peuvent être constitués par des conformations présentées par la plaque mobile elle-même, et/ou par l'organe y inséré pour constituer l'accouplement cinématique, ou bien encore, lorsque le creux traverse la plaque mobile de part en part, par la tête de commande couplée avec la plaque mobile.

Ces caractéristiques et d'autres et les avantages de l'objet de l'invention ressortiront plus clairement par la suivante description de certains modes de réalisation, donnés seulement à titre d'exemples non limitatifs et schématiquement montrés dans les dessins annexés, dans lesquels:
Fig. 1 montre une coupe axiale d'un pair de plaques en matériau dur d'un robinet mélangeur, avec les organes directement couplés à elles, dans la position d'ouverture complète;
Fig. 2 en montre une coupe faite selon la ligne II-II de la fig. 1;
Figs. 3 et 4 en montrent des coupes comme celle de la figure 2, mais avec les plaques en position de fermeture complète et, respectivement, en position d'ouverture d'un passage d'entrée seulement;
Fig. 5 montre une coupe correspondante à celle de la figure 1, mais dans un mode de réalisation dans lequel le creux de la plaque mobile est borgne et il ne traverse pas la plaque mobile;
Fig. 6 montre en coupe axiale tout entier le mécanisme d'un robinet mélangeur comportant une disposition suivant la figure 1;
Fig. 7 en montre une coupe faite selon la ligne brisée VII-VII de la figure 6; et
Figs. 8 et 9 montrent en plan, dans les positions qui correspondent à celles des figures 2 et 3, un pair de plaques dans lesquelles les moyens de pré-fermeture sont présentés par l'organe inséré dans le creux de la plaque mobile pour former l'accouplement cinématique avec le raccord de sortie faisant fonction de pivot.

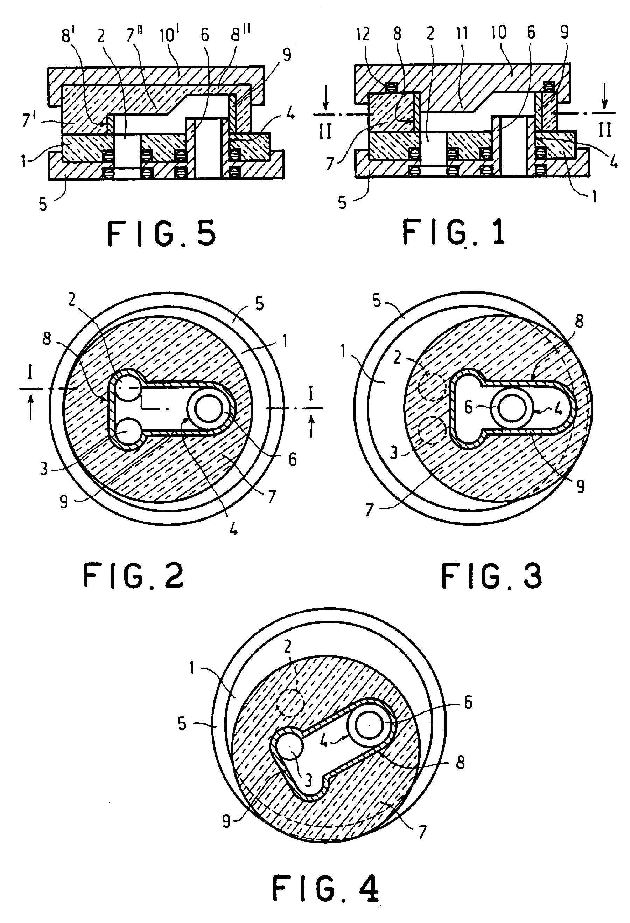

Faisant référence d'abord aux figures 1 à 4, le numéro 1 désigne une plaque fixe en matériau dur, ayant une forme en soi connue, comportant un pair de passages 2 et 3 pour l'entrée de l'eau chaud et froid ainsi qu'un passage 4 pour la sortie de l'éau mélangé. La plaque fixe 1 est supportée par un organe 5, de préférence en matière plastique, par rapport auquel des garnitures appropriées assurent l'étanchéité de la plaque fixe, tandis que d'autres garnitures sont présentées par l'organe de support 5 pour coopérer d'une façon connue avec d'autres parties du robinet. Suivant l'invention, la caractéristique de l'organe de support 5 est qu'il comporte un organe 6, constituant un raccord de sortie, lequel traverse le passage de sortie 4 de la plaque fixe 1 et s'étend jusqu'à un niveau supérieur au niveau de la surface supérieure de travail de la plaque fixe 1, c'est à dire jusqu'au niveau dans lequel se trouve une plaque mobile 7 superposée en contact avec la plaque fixe 1. En traversant le passage de sortie 4 de la plaque fixe 1, qui en général n'est pas central, l'organe 6 sert aussi pour définir la position de la plaque fixe 1 par rapport à l'organe de support 5, de sorte qu'il n'est plus nécessaire de prévoir, comme d'habitude, un moyen de référence spécial à cet effet.

La plaque mobile 7 comporte un creux 8 qui, dans ce cas, traverse la plaque mobile 7 de part en part. Le creux 8 a une forme substantiellement en T, comme il ressort des figures 2 à 4, et le bâton de la T, qui dans ce cas est dirigé suivant le diamètre, engage comme une glissière l'organe 6 constituant un raccord de sortie, de sorte qu'on réalise un accouplement cinématique capable d'autoriser la plaque mobile 7 de se déplacer suivant la direction diamétrale du bâton de la T (figures 2 et 3), ainsi que d'osciller angulairement autour de l'organe 6 constituant un pivot (figures 2 et 4). En raison de ces déplacements, la plaque mobile 7 peut découvrir dans son creux 6 les deux passages d'entrée 2 et 3 de la plaque fixe 1 (figure 2), ou bien l'un seulement de ces passages d'entrée (figure 4) ou bien encore ni l'un ni l'autre d'entr'eux (figure 3). Ces positions de la plaque mobile, ainsi que les positions intermédiaires entre celles décrites, permettent de contrôler complètement le flux d'eau chaud et froid, soit en termes de quantité débitée, soit en termes de rapport de mélange, tandis que l'eau mélangé dans le creux 8 de la plaque mobile 7 est en tous cas dirigé au raccord de sortie 6.

Le numéro 9 désigne un organe, de préférence mais non de nécessité en matière plastique, qui est inséré dans le creux 8 de la plaque mobile 7 et en double la surface périphérique interne en suivant substantiellement son pourtour. Cet organe 9, solidaire de la plaque mobile 7, forme une garniture pour l'accouplement cinématique entre la plaque mobile 7 et le raccord fixe 6 faisant fonction de pivot. Un choix approprié des matériaux constituant les organes 6 et 9 peut assurer une fluidité satisfaisante de l'accouplement cinématique qui guide la plaque mobile 7 et prévenir une usure trop rapide des parties couplées. Il serait difficile d'usiner la surface interne du creux 8 de la plaque mobile 7 en matériau dur jusqu'à un dégré de rugosité suffisamment réduit pour éviter l'érosion du pivot 6, et en tous cas un tel usinage aurait pour effet d'augmenter le prix de revient de la plaque mobile.

Comme on l'a dit, dans ce mode de réalisation le creux 8 traverse la plaque mobile 7 de part en part. De ce fait il est nécessaire qu'une tête de commande 10, couplée avec la plaque mobile 7 pour en commander les déplacements, soit rendue étanche moyennant une garniture 12, de sorte à fermer le creux 8 en constituant un couvercle.

Comme on l'a représenté en 11, la tête de commande 10 peut comporter une partie faisant saillie à l'intérieur du creux 8 de la plaque mobile 7, en une position telle qu'elle effleure l'extrémité supérieure du raccord de sortie 6 lorsque la plaque mobile 7 est déplacée vers la position de fermeture du débit. De cette façon extrèmement simple, qui n'augmente pas le prix de revient de la tête de commande 10, on peut réaliser un moyen efficace de pré-fermeture, agissant du côté de sortie du robinet, chaque fois qu'un tel moyen est nécessaire.

La figure 5 montre comme les caractéristiques de l'invention peuvent aussi trouver application dans le cas où le creux de la plaque mobile ne traverse pas la plaque mobile, mais il est borgne. Les conformations de la plaque mobile 1 et de son organe de support 5 sont identiques de celles qu'on a déjà décrit, et les différentes parties sont désignées par les mêmes chiffres de référence. La plaque mobile 7' diffère de la plaque mobile 7 selon la figure 1 en ce que son creux 8', au lieu de traverser la plaque mobile, est borgne, étant fermé au-dessus par un fond 8''. Dans ce cas aussi il est d'avantage que la surface périphérique interne du creux 8' soit garnie par un organe 9, conformé de façon appropriée, réalisé en un matériau résistant à l'usure et ayant un coefficient de frottement réduit, lequel forme l'accouplement cinématique avec le raccord de sortie 6 faisant fonction de pivot. Dans ce cas la tête de commande 10' ne demande pas d'être étanche par rapport à la plaque mobile 7', et la garniture 12 selon la figure 1 peut être omise. S'il est exigé un moyen de pré-fermeture fonctionnant d'une façon similaire de celle de l'organe 11 selon la figure 1, cet organe peut être constitué par une partie 7'' conformée d'une façon appropriée, présentée par la plaque mobile 7' et, plus particulièrement, par son fond 8''.

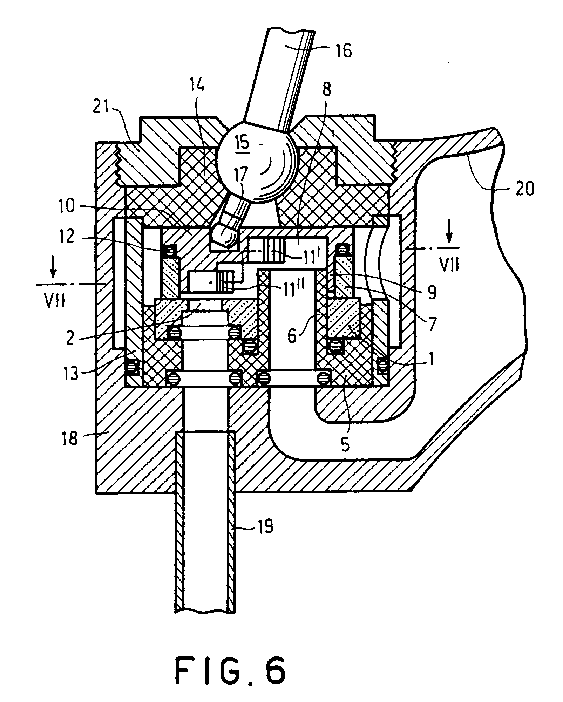

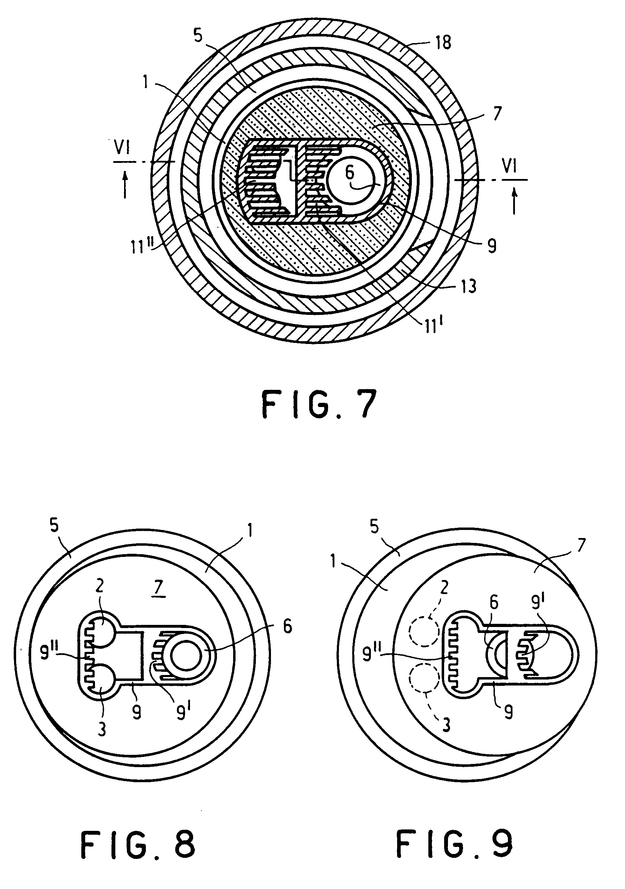

Les figures 6 et 7 montrent comme les parties caractéristiques de l'invention, montrées dans les figures 1 et 2, peuvent être introduites dans le mécanisme d'un robinet mélangeur monocommande, et elles montrent aussi d'autres possibilités de développement de l'invention. La plaque fixe 1 avec ses ouvertures de passage, l'organe de support correspondant 5 avec l'organe 6 faisant fonction de raccord de sortie et de pivot, et la plaque mobile 7, ne diffèrent pas substantiellement par rapport aux parties correspondantes suivant les figures 1 et 2; elles sont désignées par les mêmes chiffres de référence déjà employées et ne seront pas décrites plus en détail. Ces parties sont logées dans une cage 13 définissant une cartouche introduite dans le creux d'un corps de robinet 18 pourvu de raccords d'arrivée 19 et d'un bec de débit 20 et fermé par un couvercle 21. En certains cas la cage 13 pourrait aussi être d'une seule pièce avec l'organe de support 5. La cartouche définie par la cage 13 est complétée à son extrémité supérieure par une partie 14 constituant un demi-coussinet pour une balle d'articulation 15 d'un levier de manoeuvre 16. Ce levier se termine à l'intérieur par un bras avec balle 17, qui engage un creux de la tête de commande 10 pour en commander les déplacements. La tête de commande 10 est couplée avec la plaque mobile 7, et une garniture 12 en établit l'étanchéité.

Comme il ressort de la figure 6, dans les cas où la cavité 8 traverse la plaque mobile 7 de part en part, l'organe 9 formant l'accouplement cinématique, qui se trove à l'intérieur du creux 8, peut être constitué par un prolongement de la tête de commande 10 couplée avec la plaque mobile 7. En plus de la partie 11' constituant un moyen de pré-fermeture qui coopère avec le raccord de sortie 6, ou en remplacement de cette partie, la tête de commande 10 peut présenter une partie 11'' disposée pour coopérer de façon similaire avec les passages d'entrée, comme le passage 2, présentés par la plaque fixe 1. Comme il ressort de la figure 7, ces parties 11' et 11'' présentées par la tête de commande 10 peuvent avoir une forme en lames (ou bien en dents ou similaire), de sorte à exercer une action de pré-fermeture plus graduelle.

Même lorsque les moyens de pré-fermeture sont constitués par des conformations de la plaque mobile elle-même, comme selon la figure 5, ils peuvent être disposés de façon similaire à ce qu'on a représenté dans la figure 6, de sorte à coopérer avec les passages d'entrée de la plaque fixe en plus, ou au lieu, qu'avec le raccord de sortie. De plus, en ce cas aussi les moyens de pré-fermeture peuvent avoir une forme en lames, en dents ou similaire, de sorte à exercer une action de pré-fermeture plus graduelle.

En tous cas, même lorsque l'organe 9 introduit dans le creux de la plaque mobile 7 pour constituer l'accouplement cinématique avec le pivot 6 n'est pas en une seule pièce avec la tête de commande, il peut présenter des conformations 9' disposées pour effectuer une pré-fermeture par rapport au raccord de sortie 6, et/ou des conformations 9'' disposées pour effectuer une pré-fermeture par rapport aux passages d'entrée 2 et 3, comme le montrent les figures 8 et 9.

On a dit qu'il est d'avantage que l'organe 6 constituant le raccord de sortie et le pivot pour la plaque mobile 7 soit une partie d'un organe 5 de support pour la plaque fixe 1, mais on doit comprendre que dans certains cas cet organe constituant pivot pourrait aussi être constitué par une saillie tubulaire de la plaque fixe 1, entourant son ouverture de sortie 4, ou bien par un organe introduit et fixé dans l'ouverture de sortie 4 de la plaque fixe 1.

Bien que dans les modes de réalisation montrées comme des exemples les plaques 1 et 7 en matériau dur ont été supposées circulaires, on doir comprendre qu'elles peuvent avoir tout pourtour désiré ou nécessaire pour des raisons de construction. En tous cas, en raison de l'application de l'invention, la forme de ce pourtour n'est nullement imposée ou limitée par la nécessité de réaliser un accouplement cinématique avec un pivot. Il en résulte une plus grande liberté de dessin et, en général, la possibilité de choisir des formes plus simples qu'on peut réaliser industriellement d'une façon plus économique.

## Revendications

1. Robinet mélangeur monocommande, comprenant une plaque fixe en matériau dur (1) ayant deux passages (2,3) pour l'entrée de l'eau chaud et froid ainsi qu'un passage (4) pour la sortie de l'eau mélangé, et une plaque mobile en matériau dur (7) superposée en contact avec la plaque fixe (1) et pourvue d'un creux (8) constituant un conduit de passage de l'eau, du type dans lequel la plaque mobile (7) est installée de sorte à pouvoir osciller autour d'un pivot, caractérisé en ce qu'un organe fixe (6) constituant un raccord de sortie de l'eau mélangé traverse le passage de sortie (4) de la plaque fixe (1) et s'étend jusqu'au niveau de la plaque mobile (7), et que le creux (8) de la plaque mobile (7) entoure et engage ledit organe fixe (6) ainsi formant un guide pour l'oscillation de la plaque mobile (7), tandis que ledit organe fixe (6) fait fonction de pivot.

2. Robinet mélangeur suivant la revendication 1, caractérisé en ce que ledit creux (8) de la plaque mobile (7) est borgne.

3. Robinet mélangeur suivant la revendication 1, caractérisé en ce que ledit creux (8) de la plaque mobile (7) traverse de part en part la plaque mobile (7), et en ce que la plaque mobile (7) coopère de façon étanche avec une tête de commande (10) qui ferme ledit creux (8).

4. Robinet mélangeur suivant la revendication 1, caractérisé en ce que ledit organe fixe (6) est une partie d'un organe de support (5) de la plaque fixe (1) du robinet.

5. Robinet mélangeur suivant la revendication 1, caractérisé en ce qu'un organe (9) en matériau résistant à l'usure et ayant un coefficient de frottement réduit est inséré dans ledit creux (8) de la plaque mobile (7) et il constitue un accouplement cinématique avec ledit organe fixe (6) formant un pivot.

6. Robinet mélangeur suivant les revendications 3 et 5, caractérisé en ce que ledit organe (9) formant un accouplement cinématique avec ledit organe fixe (6) est constitué par une saillie de la tête de commande (10) couplée avec la plaque mobile (7).

7. Robinet mélangeur suivant une quelconque des revendications précédentes, caractérisé en ce que des parties (11; 7''; 11',11''; 9',9'') de forme appropriée de la plaque mobile (7), de la tête de commande (10) et/ou de l'organe (9) inséré dans le creux (8) de la plaque mobile (7) pour former un accouplement cinématique avec le pivot (6), sont disposées pour exercer une action de pré-fermeture par rapport au passage de sortie (4) et/ou aux passages d'entrée (2,3) de l'eau.

8. Robinet mélangeur suivant la revendication 7, caractérisé en ce que lesdites parties (11',11''; 9',9'') disposées pour exercer une action de pré-fermeture ont une forme substantiellement en lames, en dents ou similaire.

## Patentansprüche

1. Einzelbetätigungs-Wassermischer mit einer festen Hartplatte (1), die zwei Einlauföffnungen (2,3) fur das kalte und das warme Wasser und eine Auslauföffnung (4) für das gemischte Wasser aufweist, und mit einer beweglichen Hartplatte (7), die über der festen Platte (1) in Berührung mit derselben liegt und einen Hohlraum (8) aufweist, der einen Durchlaufkanal für das Wasser bildet, bei dem die bewegliche Platte (7) um einem Drehpunkt schwenkbar angeordnet ist, dadurch gekennzeichnet, dass sich ein festes, einen Auslaufstzutzen des gemischten Wassers bildende Glied (6) durch die Auslauföffnung (4) der festen Platte (1) bis zum Bereich der beweglichen Platte (7) erstreckt, und dass der Hohlraum (8) der beweglichen Platte (7) das feste Glied (6) umschliesst und mit demselben in Eingriff steht, um dadurch eine führung für das Schwenken der beweglichen Platte (7) zu bilden, während das feste Glied (6) als Drehpunkt dient.

2. Wassermischer nach Anspruch 1, dadurch gekennzeichnet, dass der Hohlraum (8) der beweglichen Platte (7) blind ist.

3. Wassermischer nach Anspruch 1, dadurch gekennzeichnet, dass der Hohlraum (8) der beweglichen Platte (7) durch die ganze bewegliche Platte (7) geht, und dass die bewegliche Platte (7) mit einem den Hohlraum (8) verschliessenden Betätigungskopf (10) abdichtend zusammenwirkt.

4. Wassermischer nach Anspruch 1, dadurch gekennzeichnet, dass das feste Glied (6) ein Bestandteil einer Halterung (5) der festen Platte (1) des Wassermischers ist.

5. Wassermischer nach Anspruch 1, dadurch gekennzeichnet, dass im Hohlraum (8) der beweglichen Platte (7) ein Element (9) aus verschleissfestem Material mit niedrigem Reibwert eingesetzt und mit dem festen, den Drehpunkt bildenden Glied (6) kraftschlüssig verbunden ist.

6. Wassermischer nach Ansprüche 3 und 5, dadurch gekennzeichnet, dass das dem festen Glied (6) kraftschlüssig verbundene Element (9) aus einem Ansatz des mit der beweglichen Platte (7) verbundenen Betätigungskopfes (10) besteht.

7. Wassermischer nach irgendeinem der vorhergehenden Ansprüche, dadurch gekennzeichnet, dass die entsprechend ausgebildeten Teile (11; 7''; 11',11''; 9',9'') der beweglichen Platte (7), des Betätigungskopfes (10) und/oder des im Hohlraum (8) der beweglichen Platte (7) eingesetzten und mit dem Drehpunkt (6) kraftschlüssig verbundenen Elements (9) so ausgelegt sind, dass sie gegenüber der Wasserauslauföffnung (4) und/oder den Wassereinlauföffnungen (2,3) eine Vorschliesswirkung ausüben.

8. Wassermischer nach Ansprüch 7, dadurch gekennzeichnet, dass die zum Ausüben einer Vorschliesswirkung ausgelegten Teile (11',11''; 9',9'') im wesentlichen lamellenförmig, zahnförmig o. dgl. sind.

## Claims

1. A single handle mixer valve, comprising a hard material fixed plate (1) having two passages (2,3) for inlet of hot and cold water, and a passage (4) for outlet of mixed water, and a hard material movable plate (7) superposed to and contacting the fixed plate (1) and provided with a hollow (8) forming a conduit for water passage, of the type in which the movable plate (7) is mounted swingable around a fulcrum, characterized in that a fixed member (6) forming a delivery connection for mixed water passes through the outlet passage (4) of the fixed plate (1) and extends up to the level of the movable plate (7), and that the hollow (8) of the movable plate (7) encircles said fixed member (6) and engages the same, thus forming a guide for the swinging of the movable plate (7), whereas said fixed member (6) acts as a fulcrum.

2. A mixer valve as set forth in Claim 1, characterized in that said hollow (8) of the movable plate (7) is blind.

3. A mixer valve as set forth in Claim 1, characterized in that said hollow (8) of the movable plate (7) traverses right through the movable plate (7), and that the movable plate (7) sealingly cooperates with a control head (10) which closes said hollow (8).

4. A mixer valve as set forth in Claim 1, characterized in that said fixed member (6) is a part of a supporting member (5) for the fixed plate (1) of the valve.

5. A mixer valve as set forth in Claim 1, characterized in that a member (9) of wear resistant material having a low friction coefficient is inserted within said hollow (8) of the movable plate (7), and forms a kinematic coupling with said fixed member (6) acting as a fulcrum.

6. A mixer valve as set forth in Claims 3 and 5, characterized in that said member (9) forming a kinematic coupling with said fixed member (6) is an integral portion of a control head (10) coupled with the movable plate (7).

7. A mixer valve as set forth in any one of the foregoing Claims, characterized in that suitably shaped portions (11; 7''; 11'-11''; 9',9'') of the movable plate (7), the control head (10), and/or the member (9) inserted within the hollow (8) of the movable plate (7) in order to form a kinematic coupling with the fulcrum (6), are arranged in order to effect a pre-closure action with respect to the outlet passage (4) and/or the inlet passages (2,3) for the water.

8. A mixer valve as set forth in Claim 7, characterized in that said portions (11',11''; 9',9'') arranged in order to effect a pre-closure action have a substantially lamellar shape, a tooth-like shape or the like.
